# EUROPEAN PATENT APPLICATION

(11) **EP 4 794 082 A1**
(43) Date of publication of application: **19.08.2026**
(21) Application number: 24896220.1
(22) Date of filing: 06.11.2024
(51) Int. Cl.: H01M 50/244, H01M 50/204, H01M 50/249

(54) **LOWER CASE AND CASE HAVING SAME, BATTERY PACK, AND ELECTRIC DEVICE**

(30) Priority: 30.11.2023 CN 202323285303 U
(71) Applicant: Contemporary Amperex Technology Co., Limited, Ningde, Fujian 352100 (CN)
(72) Inventor: LUO, Wenchao, Ningde, Fujian 352100 (CN); LIU, Yu, Ningde, Fujian 352100 (CN); SHI, Weigang, Ningde, Fujian 352100 (CN)
(74) Representative: Ran, Handong
(86) International application number: PCT/CN2024/130287
(87) International publication number: WO 2025/113129

(57) **Abstract**

A lower case (10) and a case (100) having same, a battery pack (1000), and an electric device (10000), The lower case (10) is used for the battery pack (1000), and the lower case (10) comprises: a bottom plate (11) extending in a first direction within a horizontal plane, wherein two side edges of the bottom plate (11) in a second direction within the horizontal plane are provided with first connecting portions, the first connecting portions are used for connecting an upper case (20) of the battery pack (1000), and the first direction intersects with the second direction; and first side plates (12), wherein there are two first side plates (12) respectively arranged at two ends of the bottom plate (11) in the first direction, the first side plates (12) are vertically arranged, and the lower ends of the first side plates (12) are fully welded to the bottom plate (11).

## Description

### CROSS-REFERENCE TO RELATED APPLICATION

The present application is presented based on Chinese Patent Application No. 202323285303.6 filed on November 30, 2023, and claims the priority to the Chinese Patent Application, the content of which is incorporated herein by reference in its entirety.

### TECHNICAL FIELD

The present application relates to the technical field of batteries, and in particular, to a lower case body, a case having the same, a battery pack, and an electric device.

### BACKGROUND

To meet the mounting and arrangement requirements of different vehicle types, battery packs often need to be designed with case structures of different sizes or different dimensions and shapes. For some vehicles with narrow mounting space, the case structure of the battery pack needs to be designed to be very compact while maintaining a large energy density of the battery pack to meet the mounting and arrangement requirements. In the related art, to ensure that the structural strength of the case of the battery pack meets the requirements, in the case of the battery pack, the lower case body structure is often designed to be complex. This makes it difficult to form the lower case body of the battery pack when it is processed and manufactured in an integral forming manner, resulting in a high production and manufacturing cost and inconvenience in manufacturing the lower case body of the battery pack.

### SUMMARY

The present application aims to solve at least one of the technical problems existing in the prior art. Therefore, the present application provides a lower case body. The lower case body can be processed and formed conveniently, thereby ensuring more convenient production and manufacturing of the lower case body.

The present application further provides a case being provided with the above lower case body.

The present application further provides a battery pack being provided with the above case.

The present application further provides an electric device being provided with the above battery pack.

According to a lower case body in a first aspect of the present application, the lower case body is used for a battery pack, and the lower case body includes: a bottom plate, the bottom plate extending in a first direction in a horizontal plane, two side edges of the bottom plate in a second direction in the horizontal plane being provided with first connecting parts, the first connecting parts being configured to be connected to an upper case body of the battery pack, and the first direction intersecting the second direction; and first side plates, two first side plates being provided and arranged at two ends of the bottom plate in the first direction, respectively, the first side plates being vertically disposed, and a lower end of the first side plate being connected to the bottom plate by full welding.

According to the lower case body of the present application, by providing the two first side plates, the lower end of the first side plate is connected to an end of the bottom plate in the first direction by full welding, such that the lower case body can be processed and formed easily, and the production and manufacturing of the lower case body is more flexible and convenient, and the production cost is low.

In some embodiments of the present application, a connecting flange extending toward the bottom plate in the first direction is formed at the lower end of the first side plate, and the connecting flange overlaps the bottom plate and is connected to the bottom plate by welding.

In the embodiments, the connecting flange is formed at the lower end of the first side plate to overlap the bottom plate and be connected to the bottom plate by welding, such that the first side plate can be connected and fixed to the bottom plate more conveniently and reliably. The first side plate overlaps the bottom plate, such that the bottom plate can effectively serve a function in supporting and fixing the first side plate, and the connection and fixation between the first side plate and the bottom plate are more stable and reliable. An included angle is formed between the connecting flange and the structure of the first side plate extending in the vertical direction, such that the lower end of the first side plate is provided with better structural strength, thereby effectively improving the overall structural strength of the first side plate, and ensuring more stable and reliable connection and fixation between the first side plate and the bottom plate.

In an embodiment of the present application, the two ends of the bottom plate in the first direction are provided with support plate parts, and the connecting flange is supported on an upper side surface of the support plate part and connected to the support plate part.

In the embodiments, the support plate part is disposed on the bottom plate to be connected to the connecting flange in a fitting manner, such that the connection and fixation between the first side plate and the bottom plate can be more stable and reliable, thereby ensuring more convenient and easier formation of the lower case body.

In some embodiments of the present application, at least one of the bottom plate and the first side plate is provided with a positioning structure, the positioning structure is configured to position the first side plate on the bottom plate, and the positioning structure is formed as a positioning hole, a positioning post, and/or a positioning surface.

In the embodiments, the positioning structure is disposed on at least one of the bottom plate and the first side plate, such that the first side plate and the bottom plate can be positioned and assembled conveniently and quickly. As a result, the assembly of the bottom plate and the first side plate is more convenient, and the production and manufacturing efficiency of the lower case body is higher.

In some embodiments of the present application, first connecting edges extending in a vertical direction are formed on the two side edges of the bottom plate in the second direction, the first connecting part is formed on the first connecting edge, the first connecting part is formed as a first connecting hole and penetrates through the first connecting edge in the second direction, a plurality of first connecting holes are provided, the plurality of first connecting holes are spaced apart in the first direction, and the first connecting edge is provided in the first connecting hole in a penetrating manner via a fastener to be connected to the upper case body.

In the embodiments, the first connecting edge is arranged to extend in the vertical direction and the first connecting hole is disposed on the first connecting edge, such that the upper case body is connected and fixed to the lower case body via a fastener passing through the first connecting hole in the second direction, the overall structure after the lower case body is assembled to the upper case body is more compact and the arrangement space can be better utilized. As a result, the battery pack can be mounted and arranged in a scenario with a narrow mounting space more conveniently, and the battery pack can be provided with higher energy density.

In an embodiment of the present application, a first connecting nut is embedded at a position of the first connecting hole.

In the embodiments, the first connecting nut is embedded at the position of the first connecting hole, such that when the lower case body is assembled and fixed to the upper case body, the fastener may extend from the outer side into the first connecting hole and be screwed into the first connecting nut in a fitting manner to tighten the lower case body and the upper case body, thereby ensuring more convenient and easier connection and fixation between the lower case body and the upper case body.

In an embodiment of the present application, the first connecting edges are formed by bending the two side edges of the bottom plate in the second direction upward.

In the embodiments, the first connecting edge is formed by bending, thereby resulting in a simple structure, facilitating processing, and ensuring convenient and easy processing and manufacturing of the bottom plate. The first connecting edge is formed on the bottom plate by bending, such that the structural strength of two sides of the bottom plate in the second direction can be effectively enhanced and improved. As a result, the overall structural strength of the bottom plate is effectively improved, and the weight of the bottom plate can be reduced to a certain extent while maintaining good structural strength, thereby meeting the lightweight requirements and improving the gravimetric energy density of the battery pack to a certain extent.

In some embodiments of the present application, the lower case body further includes a reinforcing structure, and the reinforcing structure is connected to the bottom plate and arranged on a lower side of the bottom plate.

In the embodiments, the reinforcing structure is disposed on the bottom plate, such that the overall structural strength of the bottom plate can meet the support and fixation requirements of the battery pack. When the bottom plate is designed and manufactured, the structure of the bottom plate can be adjusted and optimized flexibly and conveniently in combination with the arrangement of the reinforcing structure, such that the structural strength requirements of the bottom plate can be reduced to a certain extent. As a result, the structure of the bottom plate can be simple, and a small amount of materials are used, thereby reducing the difficulty in processing and manufacturing the bottom plate and the overall structural weight of the bottom plate and the reinforcing structure, and ensuring easier and more convenient production and manufacturing of the lower case body.

In an embodiment of the present application, the reinforcing structure is connected to the bottom plate by welding.

In the embodiments, the reinforcing structure is connected to the bottom plate by welding, thereby providing a convenient and reliable connection, and ensuring stable and firm connection and fixation between the reinforcing structure and the bottom plate.

In an embodiment of the present application, the reinforcing structure is of a frame structure and includes: first reinforcing members, two first reinforcing members being provided, and the two first reinforcing members extending in the first direction and being spaced apart in the second direction; and second reinforcing members, the second reinforcing member extending in the second direction, and two ends of the second reinforcing member being connected to the two first reinforcing members, respectively.

In the embodiments, the reinforcing structure is configured as a frame structure, which is lightweight, is provided with good structural strength, and uses a small amount of materials, such that the overall structure of the lower case body is lightweight, thereby improving the gravimetric energy density of the battery pack to a certain extent. In the embodiments, the first reinforcing member extending in the first direction and the second reinforcing member extending in the second direction are provided. The first reinforcing member is fitted together with the second reinforcing member, thereby serving a good function in structurally reinforcing the bottom plate in the first direction and the second direction. As a result, the bottom plate can more stably and reliably serve a function in supporting and fixing after being connected and fixed to the reinforcing structure.

In some examples of the present application, a plurality of second reinforcing members are provided, and the plurality of second reinforcing members are spaced apart in the first direction.

In the embodiments, the plurality of second reinforcing members are provided and the plurality of second reinforcing members are arranged in the first direction, such that the second reinforcing members can comprehensively cover the extension range of the bottom plate in the first direction, the bottom plate can obtain stable and reliable structural reinforcement, and the overall structural distribution of the reinforcing structure and the bottom plate is more uniform and reasonable.

In some examples of the present application, the first reinforcing member includes a first plate part and a second plate part, the first plate part is vertically disposed, the second plate part is connected to a lower end of the first plate part and extends toward the second reinforcing member in the second direction to be connected to the second reinforcing member, and the bottom plate is arranged between two first plate parts of the two first reinforcing members.

In the embodiments, the first reinforcing member includes the first plate part vertically disposed and the first plate part extending in the second direction. The bottom portions of the two sides of the bottom plate in the second direction and the edges of the two sides are reinforced and supported by the first plate part and the second plate part, such that good structural reinforcement can be provided for the structure at the first connecting hole of the bottom plate, and the connection and fixation can be more stable and reliable when the bottom plate is assembled and fixed to the upper case body.

In an example of the present application, an upwardly extending first folded edge is formed at an end, facing away from the first plate part, of the second plate part, and a groove is defined between the first folded edge and the first plate part, the first connecting edges extending in the vertical direction are formed on the two side edges of the bottom plate in the second direction, the first connecting edge is arranged in the groove, and the first connecting part is formed on the first connecting edge.

In the embodiments, the first folded edge is formed on the second plate part to be fitted together with the first plate part to define the groove, such that when the bottom plate is connected and fixed to the reinforcing structure, the first connecting edge can be positioned and fitted in the groove quickly and conveniently, thereby facilitating the assembly and connection between the bottom plate and the reinforcing structure.

In some specific embodiments of the present application, a plurality of clearance holes penetrating through the first plate part in the second direction are formed on the first plate part, the plurality of clearance holes are in one-to-one correspondence with a plurality of first connecting parts, and the clearance holes are aligned with the corresponding first connecting parts in the second direction, thereby allowing the first connecting parts to be exposed.

In the embodiments, the plurality of clearance holes in one-to-one correspondence with the first connecting parts are disposed on the first plate part, such that the first connecting parts on the bottom plate can be fitted together with fasteners.

In some specific embodiments of the present application, a second folded edge extending away from the first plate part in the second direction is formed at an upper end of the first folded edge, and the second folded edge overlaps an upper side surface of the second reinforcing member.

In the embodiments, the second folded edge extending in the second direction is formed at the upper end of the first folded edge, such that the structural strength of the second plate part can be improved, the first reinforcing member can serve a better function in structurally reinforcing the bottom plate, and to a certain extent, the first reinforcing member can use less materials during design and manufacturing, thereby better meeting the lightweight requirements of the lower case body. By providing the second folded edge, the first reinforcing member and the second reinforcing member can be provided with a good mating and overlapping surface when being connected and fixed, thereby ensuring more convenient and stable connection and fixation between the first reinforcing member and the second reinforcing member.

In some examples of the present application, the first reinforcing member and the second reinforcing member are both sheet metal members.

In the embodiments, the first reinforcing member and the second reinforcing member are both configured as sheet metal members, and the first reinforcing member and the second reinforcing member are convenient to form, easy to process, and have low manufacturing costs. The first reinforcing member and the second reinforcing member after processing and forming are lightweight and have high structural strength, thereby serving a good function in structurally reinforcing the bottom plate, meeting the lightweight requirements of the lower case body, and effectively improving the gravimetric energy density of the battery pack.

In some embodiments of the present application, the connecting flange extending toward the bottom plate in the first direction is formed at the lower end of the first side plate, the connecting flange is connected to the bottom plate by welding, a second connecting edge extending in the first direction is formed on a peripheral edge of the first side plate, the second connecting edge extends in a circumferential direction of the first side plate, and two ends of the second connecting edge are connected to two ends of the connecting flange in the second direction, respectively, a plurality of second connecting holes are formed on the second connecting edge, the plurality of second connecting holes are spaced apart in the circumferential direction of the first side plate, and the second connecting edge is provided in the second connecting hole in a penetrating manner via a fastener to be connected to the upper case body.

In the embodiments, the second connecting edge extending toward the bottom plate in the first direction is formed in the circumferential direction of the first side plate, such that the connection and fixation between the lower case body and the upper case body can be more convenient and stable, and the case structure formed by the lower case body and the upper case body fitted together is provided with a larger accommodating cavity space, thereby improving the energy density of the battery pack to a certain extent.

In an embodiment of the present application, a second connecting nut is embedded at a position of the second connecting hole.

In the embodiments, the second connecting nut is embedded at the position of the second connecting hole, such that when the lower case body is assembled and fixed to the upper case body, the fastener may extend from the outer side into the second connecting hole and be screwed into the second connecting nut in a fitting manner to tighten the lower case body and the upper case body, thereby ensuring more convenient and easier connection and fixation between the lower case body and the upper case body.

The case according to a second aspect of the present application includes the lower case body according to the first aspect of the present application; and an upper case body, the upper case body including a top plate and second side plates, two second side plates being provided, the two second side plates being respectively connected to two ends of the top plate in a first direction and extending downward, and the top plate and the two second side plates being fitted together to form the upper case body with openings at two ends in the first direction, where a lower end of the second side plate is connected to a first connecting part, and two first side plates cover openings on two sides of the upper case body in the first direction, respectively.

According to the case of the present application, by providing the lower case body according to the first aspect described above, the lower case body is provided with two first side plates, a lower end of the first side plate is connected to an end of the bottom plate in the first direction by full welding, and the two side edges of the bottom plate in a second direction form a first connecting part fixed to the upper case body, such that the lower case body can be processed and formed easily, and the production and manufacturing of the lower case body is more flexible and convenient, and the production cost is low.

The battery pack according to a third aspect of the present application includes the case according to the second aspect of the present application.

According to the battery pack of the present application, by providing the case according to the second aspect described above, the case is provided with two first side plates, a lower end of the first side plate is connected to an end of the bottom plate in the first direction by full welding, and the two side edges of the bottom plate in a second direction form a first connecting part fixed to the upper case body, such that the lower case body can be processed and formed easily, and the production and manufacturing of the lower case body is more flexible and convenient, and the production cost is low.

The electric device according to a fourth aspect of the present application includes the battery pack according to the third aspect of the present application.

According to the electric device of the present application, by providing the battery pack according to the third aspect described above, the battery pack is provided with two first side plates, a lower end of the first side plate is connected to an end of a bottom plate in a first direction by full welding, and the two side edges of the bottom plate in a second direction form a first connecting part fixed to an upper case body, such that a lower case body can be processed and formed easily, and the production and manufacturing of the lower case body is more flexible and convenient, and the production cost is low.

The additional aspects and the advantages of the present application will be partially provided in the following description, will partially become apparent from the following description, or will be learned through the practice of the present application.

### BRIEF DESCRIPTION OF THE DRAWINGS

FIG. 1 is a schematic diagram of an electric device according to an embodiment of the present application;
FIG. 2 is a schematic diagram of a battery pack according to an embodiment of the present application;
FIG. 3 is a schematic diagram of a lower case body according to an embodiment of the present application;
FIG. 4 is a partial schematic diagram of a lower case body from another angle according to an embodiment of the present application;
FIG. 5 is a schematic exploded diagram of a lower case body according to an embodiment of the present application; and
FIG. 6 is an enlarged schematic diagram of a portion at A shown in FIG. 5.

### Reference numerals:

10. lower case body; 101. clearance hole;
11. bottom plate; 111. support plate part; 112. first connecting edge; 113. first connecting nut;
12. first side plate; 121. connecting flange; 122. second connecting edge; 123. second connecting nut;
13. reinforcing structure; 131. first reinforcing member; 1311. first plate part; 1312. second plate part; 1313. first folded edge; 1314. second folded edge; 132. second reinforcing member; 14. water-cooling structure;
20. upper case body; 21. top plate; 22. second side plate;
30. sealing member;
100. case;
1000. battery pack; 2000. controller; 3000. motor;
10000. electric device.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "length", "width", "thickness", "upper", "lower", "front", "rear", "left", "right", "vertical", "horizontal", "top", "bottom", "inner", "outer", "circumferential direction", and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

The case of the battery pack is generally composed of an upper case body and a lower case body. The lower case body is generally provided with four side plates and a bottom plate, and the four side plates surround the periphery side of the bottom plate and are processed and formed with the bottom plate in an integral forming manner. However, for a battery pack applied in a narrow mounting space, to maintain good energy density of the battery pack and meet the lightweight requirements, the bottom plate of the lower case body often needs to be designed to be complex. This makes it more difficult to integrally process and manufacture the battery pack, increases the production cost, and makes the formation of the lower case body difficult.

Based on the above consideration, to facilitate the processing and formation of the lower case body and reduce the production cost of the lower case body, the present application designs a lower case body. The lower case body includes a bottom plate and two side plates, and the two side plates and the bottom plate form the lower case body structure by welding, thereby reducing the difficulty in forming the lower case body. This allows the lower case body to be processed and manufactured more easily, facilitates the formation, and reduces the production cost of the lower case body.

The case of the battery pack is configured to accommodate a plurality of battery cells of the battery pack or a plurality of battery modules composed of a plurality of battery cells. The battery cell may serve as an electric device of a power source, or various energy storage systems using batteries as the energy storage element. The electric device may be, but is not limited to, a mobile phone, a tablet, a laptop computer, an electric toy, an electric tool, an electric bicycle, an electric vehicle, a ship, a spacecraft, and the like. The electric toy may include stationary or mobile electric toys, such as game consoles, electric car toys, electric ship toys, or electric airplane toys. The spacecraft may include airplanes, rockets, space shuttles, spaceships, and the like.

Hereinafter, for ease of description, the present application is illustrated by taking a vehicle as an example of the electric device 10000 according to an embodiment of the present application.

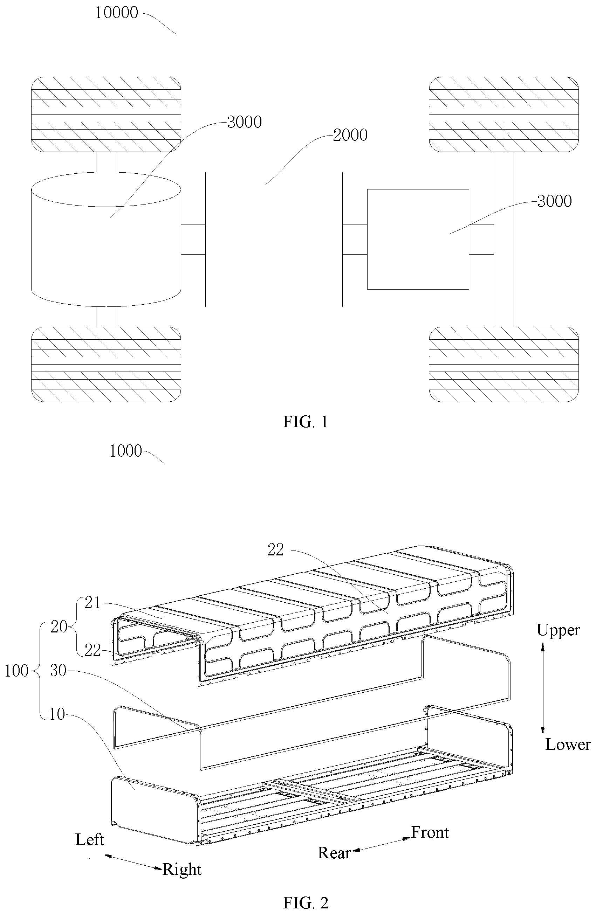

Referring to FIG. 1, FIG. 1 is a schematic diagram of an electric device 10000 according to an embodiment of the present application. The vehicle may be a fuel vehicle, a gas vehicle, or a new energy vehicle. The new energy vehicle may be a pure electric vehicle, a hybrid vehicle, an extended-range vehicle, or the like. A battery pack 1000 is disposed inside the vehicle, and the battery pack 1000 may be disposed at the bottom, head, or rear of the vehicle. The battery pack 1000 may be configured to supply power to the vehicle. For example, the battery pack 1000 may serve as an operation power source for the vehicle. The vehicle may further include a controller 2000 and a motor 3000. The controller 2000 is configured to control the battery pack 1000 to supply power to the motor 3000, e.g., for operation power needed by the vehicle for start-up, navigation, and driving.

In some embodiments of the present application, the battery pack 1000 may not only serve as an operation power source for the vehicle, but also as a driving power source for the vehicle to, replacing or partially replacing fuel or natural gas, provide driving power for the vehicle.

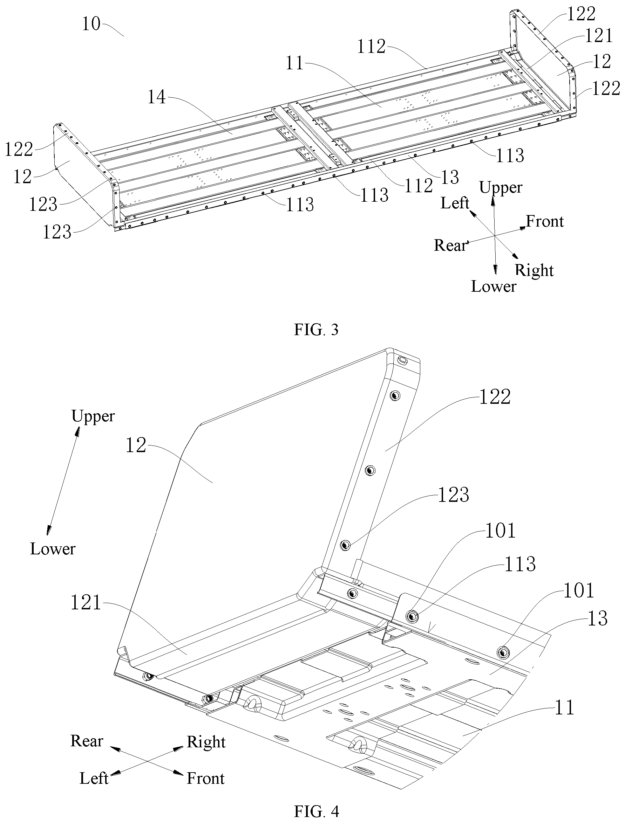

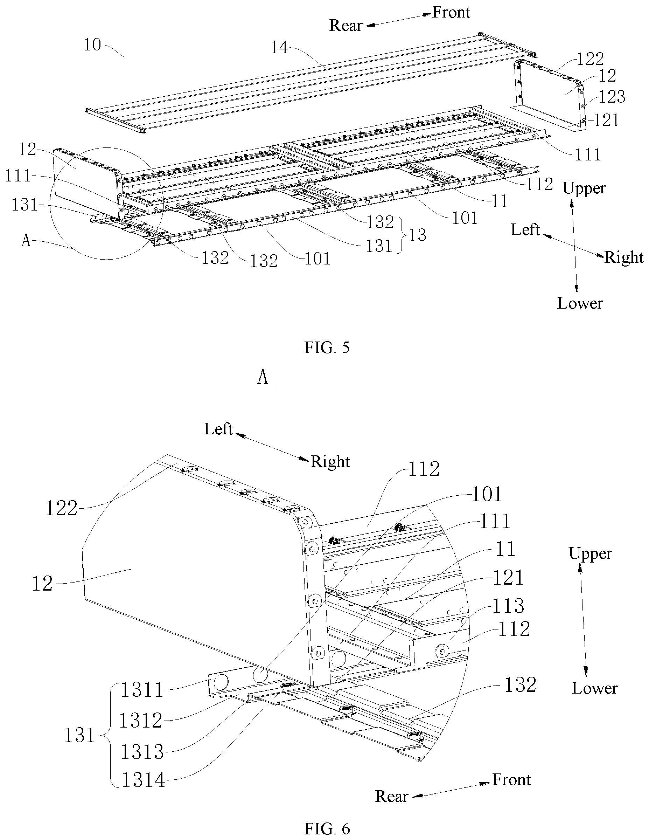

A lower case body 10 according to embodiments of a first aspect of the present application is described below with reference to FIGs. 2 to 6. FIG. 2 is a schematic diagram of a battery pack 1000 according to an embodiment of the present application; FIG. 3 is a schematic diagram of a lower case body 10 according to an embodiment of the present application; FIG. 4 is a partial schematic diagram of a lower case body 10 from another angle according to an embodiment of the present application; FIG. 5 is a schematic exploded diagram of a lower case body 10 according to an embodiment of the present application; and FIG. 6 is an enlarged schematic diagram of a portion at A shown in FIG. 5.

As shown in FIGs. 2 to 6, the lower case body 10 according to the embodiments of the first aspect of the present application is used for the battery pack 1000. The lower case body 10 includes a bottom plate 11 and first side plates 12. The bottom plate 11 extends in a first direction (a front-rear direction as shown in FIG. 2) in a horizontal plane, two side edges of the bottom plate 11 in a second direction (a left-right direction as shown in FIG. 2) in the horizontal plane are provided with first connecting parts, the first connecting parts are configured to be connected to an upper case body 20 of the battery pack 1000, and the first direction intersects the second direction; two first side plates 12 are provided and arranged at two ends of the bottom plate 11 in the first direction, respectively, the first side plates 12 are vertically disposed (in an upper-lower direction as shown in FIG. 2), and a lower end of the first side plate 12 is connected to the bottom plate 11 by full welding.

The bottom plate 11 is configured to support and protect various electric components, electric connectors, and battery cells in the battery pack 1000. The bottom plate 11 may be composed of a plurality of layers of sheet metal members, and the material of the bottom plate 11 may be selected to be a high-strength material such as aluminum alloy, steel, or stainless steel for processing and manufacturing. The first connecting part on the bottom plate 11 may be a structure such as a connecting post, a connecting hole, a connecting boss, or a connecting slot.

In the embodiments, the first direction intersects the second direction, which may indicate that the first direction is not parallel to the second direction. For example, the first direction may form a specific included angle with the second direction, or the first direction may be perpendicular to the second direction. In the embodiments, the first connecting part is configured to be connected to the upper case body 20 of the battery pack 1000, and the first connecting part and the upper case body 20 may be connected and assembled by riveting, screwing, welding, or the like. The first side plate 12 is located at two ends of the bottom plate 11 in the first direction and is vertically disposed, and a lower end of the first side plate 12 is connected to the bottom plate 11. When the upper case body 20 and the lower case body 10 are assembled, the upper case body 20 and two side edges of the bottom plate 11 in the second direction are connected, and the upper case body 20 may be fitted together with the two first side plates 12 and the bottom plate 11 to form, between the bottom plate 11 and the two first side plates 12, an accommodating cavity structure for accommodating components such as battery cells. The first side plate 12 may be made of the same material as the bottom plate 11 during processing and manufacturing, and the first side plate 12 may be integrally formed or formed by welding. The first side plate 12 is arranged at two ends of the bottom plate 11 in the first direction, a length dimension of the first side plate 12 in the second direction may be the same as a length dimension of the bottom plate 11 in the second direction, and a dimension of the first side plate 12 extending in a vertical direction may be determined based on the design requirements of the battery pack 1000.

The structure of the lower case body 10 formed by the two first side plates 12 and the bottom plate 11 fitted together may be formed in a U shape on a projection plane perpendicular to the second direction. In the second direction, two sides of the lower case body 10 are open, thereby facilitating the assembly of the battery cells, the electric connectors, and the like in the battery pack 1000. The lower case body 10 has a simple structure and is lightweight, thereby effectively improving the gravimetric energy density of the battery pack 1000.

The lower end of the first side plate 12 is connected to the bottom plate 11 by full welding. Specifically, in the second direction, a continuous weld seam may be formed between the lower end of the first side plate 12 and the bottom plate 11. When the lower case body 10 is processed and manufactured, the bottom plate 11 and the first side plate 12 may be processed and manufactured separately, and the processed bottom plate 11 is connected and fixed to the processed first side plate 12 by full welding, thereby producing the lower case body 10 of the battery pack 1000.

In the embodiments, the two first side plates 12 and the bottom plate 11 of the lower case body 10 are separately disposed and are connected and formed by welding, such that the lower case body 10 is processed and manufactured easily and conveniently, and the processing and manufacturing cost of the lower case body 10 is low. The lower end of the first side plate 12 is connected to the bottom plate 11 by full welding, thereby allowing the accommodating cavity formed after the assembly of the lower case body 10 and the upper case body 20 to have good sealing performance at the position where the lower end of the first side plate 12 is connected to the bottom plate 11. As a result, the battery cells and the electric connectors in the battery pack 1000 obtain a good sealing protection effect in the accommodating cavity, thereby ensuring more stable and reliable operation of the battery pack 1000.

In the embodiments, the bottom plate 11 is provided with the first connecting parts on the two side edges in the second direction, thereby facilitating the connection and assembly with the upper case body 20. It can be understood that components such as the plurality of battery cells and the electric connectors in the battery pack 1000 are generally fixed on the bottom plate 11 of the lower case body 10 during assembly, the bottom plate 11 serves a primary function in supporting and fixing, the bottom plate 11 requires high structural strength, while the structures of the first side plate 12 and the upper case body 20 of the battery pack 1000 serve a minor function in supporting and fixing, and the first side plate 12 and the upper case body 20 may have their structural strength set low during design and manufacturing to achieve the effect of reducing the weight of the battery pack 1000 and improving the gravimetric energy density of the battery pack 1000. In the embodiments, the first side plate 12 and the bottom plate 11 are processed and manufactured separately, thereby allowing the first side plate 12 and the bottom plate 11 to have their structural strength designed separately as required during the design and manufacturing of the lower case body 10. As a result, the production and manufacturing of the first side plate 12 and the bottom plate 11 can be more flexible and convenient, thereby ensuring easier and more convenient production and manufacturing of the lower case body 10.

In the embodiments, the two first side plates 12 are arranged in the lower case body 10 and fitted together with the upper case body 20 to form an upright plate structure defining in an enclosing manner the circumferential direction of the bottom plate 11, so as to be fitted together with the bottom plate 11 to form the accommodating cavity. This simplifies the structure of the lower case body 10, further reduces the difficulty in processing and manufacturing the lower case body 10 to a certain extent, and ensures faster and more convenient production and manufacturing of the lower case body 10, thereby resulting in high production efficiency. It can be understood that the battery cells in the battery pack 1000 may expand in a thickness direction during use of the battery pack 1000. In the embodiments, the first side plates 12 are arranged at the two ends of the bottom plate 11 in the first direction, respectively, and the first side plates 12 are connected to the bottom plate 11 by welding. As a result, after the battery pack 1000 is assembled, when the thickness direction of the battery cells is consistent with the first direction, the two first side plates 12 can cooperate well to suppress the expansion of the battery cells, thereby ensuring more stable and reliable operation of the battery pack 1000.

According to the lower case body 10 in the embodiments of the present application, by providing the two first side plates 12, the lower end of the first side plate 12 is connected to an end of the bottom plate 11 in the first direction by full welding, such that the lower case body 10 can be processed and formed easily, and the production and manufacturing of the lower case body is more flexible and convenient, and the production cost is low.

In some embodiments of the present application, as shown in FIG. 4, a connecting flange 121 extending toward the bottom plate 11 in the first direction may be formed at the lower end of the first side plate 12, and the connecting flange 121 overlaps the bottom plate 11 and is connected to the bottom plate by welding.

The connecting flange 121 extends toward the bottom plate 11 in the first direction. Since the first side plate 12 is vertically disposed, an included angle may be formed between the first side plate 12 and the connecting flange 121. The connecting flange 121 may be of a horizontally extending flanged structure, or the connecting flange 121 may be of a flanged structure extending obliquely upward or downward in the first direction. The connecting flange 121 overlaps the bottom plate 11, and the connecting flange 121 may partially or completely overlap the bottom plate 11 in the second direction.

When the connecting flange 121 partially overlaps the bottom plate 11, the portion of the connecting flange 121 that overlaps the bottom plate 11 and the bottom plate 11 are vertically stacked and connected by welding, and the remaining portion of the connecting flange 121 may abut against the bottom plate 11 in the first direction and be connected to the bottom plate by welding. When the connecting flange 121 completely overlaps the bottom plate 11, the connecting flange 121 and the bottom plate 11 may always be vertically stacked in the second direction. After the connecting flange 121 is welded to the bottom plate 11, a continuous weld seam may be formed in the second direction. The connecting flange 121 may be partially or completely located on the upper side surface of the bottom plate 11 in the first direction.

In the embodiments, the connecting flange 121 is formed at the lower end of the first side plate 12 to overlap the bottom plate 11 and be connected to the bottom plate by welding, such that the first side plate 12 can be connected and fixed to the bottom plate 11 more conveniently and reliably. The first side plate 12 overlaps the bottom plate 11, such that the bottom plate 11 can effectively serve a function in supporting and fixing the first side plate 12, and the connection and fixation between the first side plate 12 and the bottom plate 11 are more stable and reliable. An included angle is formed between the connecting flange 121 and the structure of the first side plate 12 extending in the vertical direction, such that the lower end of the first side plate 12 is provided with better structural strength, thereby effectively improving the overall structural strength of the first side plate 12, and ensuring more stable and reliable connection and fixation between the first side plate 12 and the bottom plate 11.

In some embodiments of the present application, as shown in FIGs. 4 and 5, the connecting flange 121 extending toward the bottom plate 11 in the first direction may be formed at the lower end of the first side plate 12, and the connecting flange 121 is connected to the bottom plate 11 by welding. A second connecting edge 122 extending in the first direction is formed on a peripheral edge of the first side plate 12, the second connecting edge 122 extends in a circumferential direction of the first side plate 12, and two ends of the second connecting edge are connected to two ends of the connecting flange 121 in the second direction, respectively. A plurality of second connecting holes are formed on the second connecting edge 122, the plurality of second connecting holes are spaced apart in the circumferential direction of the first side plate 12, and the second connecting edge 122 is provided in the second connecting hole in a penetrating manner via a fastener to be connected to the upper case body 20.

The second connecting edge 122 may be integrally processed and formed with the first side plate 12 and the connecting flange 121. For example, the second connecting edge 122 may be integrally formed with the first side plate 12 and the connecting flange 121 by sheet metal stamping, the length dimension of the second connecting edge 122 in the first direction may be greater than, less than, or equal to the length dimension of the connecting flange 121 in the first direction, and the length dimension of the second connecting edge 122 in the first direction may be set as required.

When the lower case body 10 is connected and fixed to the upper case body 20, the upper case body 20 is connected and fixed to the second connecting edge 122 in the circumferential direction of the first side plate 12 via a fastener. Specifically, the upper case body 20 overlaps and is connected to, in the second direction, a portion of the second connecting edge 122 extending in the vertical direction, and the upper case body 20 overlaps and is connected to a portion of the second connecting edge 122 extending in the second direction in an up-down manner. A plurality of second connecting holes are provided. For example, three, four, five, six, seven, or eight second connecting holes may be provided. The second connecting holes may be evenly spaced apart or unevenly spaced apart in the circumferential direction of the first side edge at the second connecting edge 122, and the arrangement positions of the second connecting holes may be reasonably set based on the connection and fixation requirements of the lower case body 10 and the upper case body 20.

In the embodiments, the second connecting edge 122 is formed on the first side plate 12 to be connected to the upper case body 20, thereby resulting in a simple structure. The second connecting edge 122 can enable higher structural strength of the first side plate 12, such that the first side plate 12 can be connected and fixed to the upper case body 20 more stably, and the expansion of the battery cells in the battery pack 1000 can be better suppressed, thereby ensuring better stability of the battery pack 1000. The first side plate 12 is of a flanged structure, thereby allowing the first side plate 12 to have a good structural strength while being lightweight. As a result, the lower case body 10 is lightweight and the gravimetric energy density of the battery pack 1000 is improved.

The connecting flange 121 and the second connecting edge 122 are formed on the circumferential direction of the first side plate 12, such that the connecting flange 121 and the second connecting edge 122 enclose to form a cavity on a side, facing the bottom plate 11, of the first side plate 12. After the lower case body 10 is connected and fixed to the upper case body 20, the cavity enclosed by the connecting flange 121 and the second connecting edge 122 is formed as a part of the accommodating cavity in the case 100, and components such as the battery cells and the electric connectors in the accommodating cavity may be mounted and arranged using the cavity, such that the battery pack 1000 can have a larger accommodating cavity space within the same volume, thereby allowing more battery cells to be arranged in the battery pack 1000, and effectively improving the energy density of the battery pack 1000.

In the embodiments, the second connecting edge 122 extending toward the bottom plate 11 in the first direction is formed in the circumferential direction of the first side plate 12, such that the connection and fixation between the lower case body 10 and the upper case body 20 can be more convenient and stable, and the structure of the case 100 formed by the lower case body 10 and the upper case body 20 fitted together is provided with a larger accommodating cavity space, thereby improving the energy density of the battery pack 1000 to a certain extent.

In an embodiment of the present application, referring to FIGs. 3 to 6, the two ends of the bottom plate 11 in the first direction may be provided with support plate parts 111, and the connecting flange 121 is supported on the upper side surface of the support plate part 111 and connected to the support plate part 111.

The upper side surface of the support plate part 111 may be matched in shape with the lower side surface of the connecting flange 121. When the first side plate 12 is connected and fixed to the bottom plate 11, the connecting flange 121 of the first side plate 12 abuts against the upper side surface of the support plate part 111 and performs appropriate positional adjustment, and the connecting flange 121 and the support plate part 111 are welded by full welding in the second direction, such that the first side plate 12 is connected and fixed to the bottom plate 11.

In the embodiments, the support plate part 111 is disposed on the bottom plate 11 to be connected to the connecting flange 121 in a fitting manner, such that the connection and fixation between the first side plate 12 and the bottom plate 11 can be more stable and reliable, thereby ensuring more convenient and easier formation of the lower case body 10.

In some embodiments of the present application, referring to FIGs. 3 and 4, at least one of the bottom plate 11 and the first side plate 12 may be provided with a positioning structure, the positioning structure is configured to position the first side plate 12 on the bottom plate 11, and the positioning structure is formed as a positioning hole, a positioning post, and/or a positioning surface.

At least one of the bottom plate 11 and the first side plate 12 is provided with a positioning structure. For example, the bottom plate 11 may be provided with a positioning structure, or the first side plate 12 is provided with a positioning structure, or both the bottom plate 11 and the first side plate 12 are provided with positioning structures. The positioning structure may be one or more of a positioning hole, a positioning post, and a positioning surface. For example, when the bottom plate 11 is provided with a positioning hole, the first side plate 12 may be provided with a corresponding positioning post to be fitted with the positioning hole. When a positioning surface is formed on the bottom plate 11, a mating surface may be correspondingly formed on the first side plate 12. Alternatively, the bottom plate 11 may be provided with a positioning structure formed by combinations such as a positioning hole and a positioning post, a positioning hole and a positioning surface, or a positioning post and a positioning surface. When the bottom plate 11 is assembled and connected to the first side plate 12, the first side plate 12 is assembled in place on the bottom plate 11 through the positioning structure, to facilitate the welding of the first side plate and the bottom plate. The specific structural form and the arrangement number of the positioning structures may be determined as required.

In the embodiments, the positioning structure is disposed on at least one of the bottom plate 11 and the first side plate 12, such that the first side plate 12 and the bottom plate 11 can be positioned and assembled conveniently and quickly. As a result, the assembly of the bottom plate 11 and the first side plate 12 is more convenient, and the production and manufacturing efficiency of the lower case body 10 is higher.

In some embodiments of the present application, as shown in FIG. 3, first connecting edges 112 extending in the vertical direction may be formed on the two side edges of the bottom plate 11 in the second direction, the first connecting part is formed on the first connecting edge 112, the first connecting part is formed as a first connecting hole and penetrates through the first connecting edge 112 in the second direction, a plurality of first connecting holes are provided, the plurality of first connecting holes are spaced apart in the first direction, and the first connecting edge 112 is provided in the first connecting hole in a penetrating manner via a fastener to be connected to the upper case body 20.

The two side edges of the bottom plate 11 in the second direction form the first connecting edges 112 extending in the vertical direction; that is, the first connecting edge 112 is provided with a certain width in the vertical direction. When the upper case body 20 is assembled and fixed to the lower case body 10, referring to FIGs. 2 and 4, the side surface of the upper case body 20 extending in the vertical direction is stacked with and abuts against the first connecting edge 112 in the second direction, and the fastener is provided in the first connecting hole at the first connecting edge 112 in a penetrating manner to connect the bottom plate 11 and the upper case body 20. A plurality of first connecting holes are provided. For example, three, four, five, six, or seven first connecting holes may be provided.

In the embodiments, the first connecting part is formed on the first connecting edge 112 extending in the vertical direction and formed as a connecting hole, and the bottom plate 11 is connected and fixed to the upper case body 20 via a fastener passing through the connecting hole in the second direction. The dimension of the fastener and the dimension of the first connecting hole have a small influence on the length dimension of the bottom plate 11 in the second direction.

Specifically, since the first connecting hole is formed on the first connecting edge 112 extending in the vertical direction, the hole diameter of the first connecting hole may not cause an increase in the length dimension of the bottom plate 11 in the second direction during processing and manufacturing, and the bottom plate 11 can omit the flanged structure extending outward in the second direction, such that the overall structure of the lower case body 10 structure formed after the bottom plate 11 is assembled to the first side plate 12 is more compact in the second direction, and then the case 100 structure formed after the lower case body 10 is assembled to the upper case body 20 can better utilize the arrangement space. Within the same space range in the second direction, the lower case body 10 is fitted together with the upper case body 20 to accommodate more battery cells, such that the space utilization rate in the battery pack 1000 can be effectively improved to a certain extent, and the battery pack 1000 is provided with higher energy density.

In the embodiments, the first connecting edge 112 is arranged to extend in the vertical direction and the first connecting hole is disposed on the first connecting edge 112, such that the upper case body 20 is connected and fixed to the lower case body 10 via a fastener passing through the first connecting hole in the second direction, the overall structure after the lower case body 10 is assembled to the upper case body 20 is more compact and the arrangement space can be better utilized. As a result, the battery pack 1000 can be mounted and arranged in a scenario with a narrow mounting space more conveniently, and the battery pack 1000 can be provided with higher energy density.

In an embodiment of the present application, as shown in FIG. 4, a first connecting nut 113 may be embedded at the position of the first connecting hole.

The first connecting nut 113 is embedded at the position of the first connecting hole, the first connecting nut 113 may be a rivet nut, and the first connecting nut 113 is fixed at the position of the first connecting hole in a penetrating manner by riveting. When the lower case body 10 is assembled and fixed to the upper case body 20, the fastener may extend from the outer side of the upper case body 20 into the first connecting hole to be screwed into the first connecting nut 113 in a fitting manner, thereby tightening and fixing the upper case body 20 and the bottom plate 11. Optionally, the first connecting nut 113 may also be a common hex nut, and the first connecting nut 113 may be fixed at the position of the first connecting hole by welding, and the first connecting nut 113 may be disposed on a side surface, facing the bottom plate 11 in the second direction, of the first connecting edge 112.

In the embodiments, the first connecting nut 113 is embedded at the position of the first connecting hole, such that when the lower case body 10 is assembled and fixed to the upper case body 20, the fastener may extend from the outer side into the first connecting hole and be screwed into the first connecting nut 113 in a fitting manner to tighten the lower case body 10 and the upper case body 20, thereby ensuring more convenient and easier connection and fixation between the lower case body 10 and the upper case body 20.

In an embodiment of the present application, as shown in FIGs. 5 and 6, the first connecting edges 112 may be formed by bending the two side edges of the bottom plate 11 in the second direction upward.

When the first connecting edge 112 is processed and manufactured, the bottom plate 11 may be processed in a bending machine to bend the two side edges of the bottom plate 11 in the second direction upward. The length dimension of the first connecting edge 112 in the vertical direction may be set based on actual assembly requirements.

In the embodiments, the first connecting edge 112 is formed by bending, thereby resulting in a simple structure, facilitating processing, and ensuring convenient and easy processing and manufacturing of the bottom plate 11. The first connecting edge 112 is formed on the bottom plate 11 by bending, such that the structural strength of two sides of the bottom plate 11 in the second direction can be effectively enhanced and improved. When the lower case body 10 is assembled to the upper case body 20, the lower case body 10 can be connected and fixed to the upper case body 20 via the first connecting edge 112 more stably and firmly. The overall structural strength of the bottom plate 11 is effectively improved, and the weight of the bottom plate 11 can be reduced to a certain extent while maintaining good structural strength, thereby meeting the lightweight requirements and improving the gravimetric energy density of the battery pack 1000 to a certain extent.

In some embodiments of the present application, as shown in FIG. 5, the lower case body 10 may further include a reinforcing structure 13, and the reinforcing structure 13 is connected to the bottom plate 11 and arranged on the lower side of the bottom plate 11.

The reinforcing structure 13 may be in a structural form of a reinforcing plate, a reinforcing rib, a reinforcing beam, or the like. The reinforcing structure 13 may be processed and manufactured from a material with higher strength. The reinforcing structure 13 may be reasonably arranged based on the support requirements of various components in the battery pack 1000 at different positions of the bottom plate 11.

In the embodiments, the reinforcing structure 13 is disposed on the bottom plate 11, such that the overall structural strength of the bottom plate 11 can meet the support and fixation requirements of the battery pack 1000. When the bottom plate 11 is designed and manufactured, the structure of the bottom plate 11 can be adjusted and optimized flexibly and conveniently in combination with the arrangement of the reinforcing structure 13, such that the structural strength requirements of the bottom plate 11 can be reduced to a certain extent. As a result, the structure of the bottom plate 11 can be simple, and a small amount of materials are used, thereby reducing the difficulty in processing and manufacturing the bottom plate 11 and the overall structural weight of the bottom plate 11 and the reinforcing structure 13, and ensuring easier and more convenient production and manufacturing of the lower case body 10 with low cost.

In an embodiment of the present application, the reinforcing structure 13 may be connected to the bottom plate 11 by welding.

The reinforcing structure 13 is connected to the bottom plate 11 by welding. For example, the reinforcing structure 13 may be connected to the bottom plate 11 by welding, such as spot welding, full welding, or high-frequency welding.

In the embodiments, the reinforcing structure 13 is connected to the bottom plate 11 by welding, thereby providing a convenient and reliable connection, and ensuring stable and firm connection and fixation between the reinforcing structure 13 and the bottom plate 11.

In an embodiment of the present application, as shown in FIG. 5, the reinforcing structure 13 may be of a frame structure and include first reinforcing members 131 and second reinforcing members 132. Two first reinforcing members 131 are provided, and the two first reinforcing members 131 extend in the first direction and are spaced apart in the second direction; the second reinforcing member 132 extends in the second direction, and two ends of the second reinforcing member are connected to the two first reinforcing members 131, respectively.

The first reinforcing member 131 may be a sheet metal stamped member, and the material of the first reinforcing member 131 may be made of the same material as the bottom plate 11 during processing and manufacturing. In the embodiments, the first reinforcing member 131 extends in the first direction. Specifically, the first reinforcing member 131 may extend to the two ends of the bottom plate 11 in the first direction, the first reinforcing member 131 may be disposed on the edge of the bottom plate 11 in the second direction, or the first reinforcing member 131 may be disposed between the two side edges of the bottom plate 11 in the second direction, and the first reinforcing member 131 may be integrally formed or formed by splicing.

The second reinforcing member 132 may be a sheet metal stamped member, the material of the second reinforcing member 132 may be made of the same material as the first reinforcing member 131, the second reinforcing member 132 may be integrally formed or formed by splicing, the second reinforcing member 132 and the first reinforcing member 131 may be connected by welding, and the second reinforcing member 132 and the first reinforcing member 131 may also be integrally formed.

In the embodiments, the reinforcing structure 13 is configured as a frame structure, which is lightweight, is provided with good structural strength, and uses a small amount of materials, such that the overall structure of the lower case body 10 is lightweight, thereby improving the gravimetric energy density of the battery pack 1000 to a certain extent. In the embodiments, the first reinforcing member 131 extending in the first direction and the second reinforcing member 132 extending in the second direction are provided. The first reinforcing member 131 is fitted together with the second reinforcing member 132, thereby serving a good function in structurally reinforcing the bottom plate 11 in the first direction and the second direction. As a result, the bottom plate 11 can more stably and reliably serve a function in supporting and fixing after being connected and fixed to the reinforcing structure 13.

In some examples of the present application, as shown in FIG. 5, a plurality of second reinforcing members 132 may be provided, and the plurality of second reinforcing members 132 are spaced apart in the first direction.

For example, two, three, four, five, or six second reinforcing members 132 may be provided. The plurality of second reinforcing members 132 may be evenly spaced apart in the second direction, or the plurality of second reinforcing members 132 may be spaced apart in the second direction at different intervals. The arrangement positions of the second reinforcing members 132 in the second direction may be reasonably and flexibly arranged based on the reinforcement requirements of the bottom plate 11.

In the embodiments, the plurality of second reinforcing members 132 are provided and the plurality of second reinforcing members 132 are arranged in the first direction, such that the second reinforcing members 132 can comprehensively cover the extension range of the bottom plate 11 in the first direction, the bottom plate 11 can obtain stable and reliable structural reinforcement, and the overall structural distribution of the reinforcing structure 13 and the bottom plate 11 is more uniform and reasonable.

In some examples of the present application, as shown in FIG. 6, the first reinforcing member 131 may include a first plate part 1311 and a second plate part 1312, the first plate part 1311 is vertically disposed, the second plate part 1312 is connected to a lower end of the first plate part 1311 and extends toward the second reinforcing member 132 in the second direction to be connected to the second reinforcing member 132, and the bottom plate 11 is arranged between two first plate parts 1311 of the two first reinforcing members 131.

The first plate part 1311 is vertically disposed, and the length dimension of the first plate part 1311 in the vertical direction may be matched with the length dimension of the first connecting edge 112 of the bottom plate 11 in the vertical direction. Specifically, the upper end surface of the first plate part 1311 may be higher than, equal to, or lower than the upper end surface of the first connecting edge 112. The length dimension of the second plate part 1312 extending in the second direction may be set based on the reinforcement requirements of the bottom plate 11. The first reinforcing member may be formed by bending an entire metal plate to form the first plate part 1311 and the second plate part 1312, or the first plate part 1311 and the second plate part 1312 may be of plate structures independent of each other and welded to form the first reinforcing member 131.

In the embodiments, the first plate part 1311 is vertically disposed, the second plate part 1312 extends toward the second reinforcing member 132 in the second direction, and an included angle is formed between the first plate part 1311 and the second plate part 1312. When the bottom plate 11 is connected and fixed to the first reinforcing member 131, the bottom portions of the two sides of the bottom plate 11 in the second direction are supported on the upper surface of the second plate part 1312, and the first connecting edges 112 formed on the two sides of the bottom plate 11 in the second direction and the first plate part 1311 are stacked in the second direction.

In the embodiments, the first reinforcing member 131 includes the first plate part 1311 vertically disposed and the first plate part 1311 extending in the second direction. The bottom portions of the two sides of the bottom plate 11 in the second direction and the edges of the two sides are reinforced and supported by the first plate part 1311 and the second plate part 1312, such that good structural reinforcement can be provided for the first connecting edge 112 of the bottom plate 11, and the connection and fixation can be more stable and reliable when the bottom plate 11 is assembled and fixed to the upper case body 20.

In an example of the present application, as shown in FIG. 6, an upwardly extending first folded edge 1313 may be formed at an end, facing away from the first plate part 1311, of the second plate part 1312, and a groove is defined between the first folded edge 1313 and the first plate part 1311, the first connecting edges 112 extending in the vertical direction are formed on the two side edges of the bottom plate 11 in the second direction, the first connecting edge 112 is arranged in the groove, and the first connecting part is formed on the first connecting edge 112.

The upwardly extending first folded edge 1313 is formed at the end, facing away from the first plate part 1311, of the second plate part 1312; that is, the first folded edge 1313 is formed at an end, connected to the second reinforcing member 132, of the second plate part 1312. The first folded edge 1313 extends upward and is connected to the second reinforcing member 132, and the first folded edge 1313 is fitted together with the first plate part 1311 and the second plate part 1312 to define the groove.

In the embodiments, the first folded edge 1313 is formed on the second plate part 1312 to be fitted together with the first plate part 1311 to define the groove, such that when the bottom plate 11 is connected and fixed to the reinforcing structure 13, the first connecting edge 112 can be positioned and fitted in the groove quickly and conveniently, thereby facilitating the assembly and connection between the bottom plate 11 and the reinforcing structure 13.

In some specific embodiments of the present application, as shown in FIG. 6, a plurality of clearance holes 101 penetrating through the first plate part 1311 in the second direction may be formed on the first plate part 1311, the plurality of clearance holes 101 are in one-to-one correspondence with a plurality of first connecting parts, and the clearance holes 101 are aligned with the corresponding first connecting parts in the second direction, thereby allowing the first connecting parts to be exposed.

The shape of the clearance hole 101 may be matched with the shape of the first connecting part. When the lower case body 10 is assembled to the upper case body 20, the first connecting part formed on the bottom plate 11 is exposed through the clearance hole 101 in the second direction, and the fastener is fitted together with the first connecting part from the outer side of the first plate part 1311 to fix the upper case body 20 to the bottom plate 11, thereby assembling and fixing the lower case body 10 and the upper case body 20.

In the embodiments, the plurality of clearance holes 101 in one-to-one correspondence with the first connecting parts are disposed on the first plate part 1311, such that the first connecting parts on the bottom plate 11 can be fitted together with fasteners.

In some specific embodiments of the present application, as shown in FIG. 6, a second folded edge 1314 extending away from the first plate part 1311 in the second direction may be formed at an upper end of the first folded edge 1313, and the second folded edge 1314 overlaps the upper side surface of the second reinforcing member 132.

The second folded edge 1314 extends toward the second reinforcing member 132 in the second direction. When the first reinforcing member 131 is fixed to the second reinforcing member 132 by welding, the second folded edge 1314 overlaps the upper side surfaces of the plurality of second reinforcing members 132 and is connected to the second reinforcing members 132 by welding. The length dimension of the second folded edge 1314 in the second direction may be reasonably set based on the welding and fixing requirements.

In the embodiments, the second folded edge 1314 extending in the second direction is formed at the upper end of the first folded edge 1313, such that the structural strength of the second plate part 1312 can be improved, the first reinforcing member 131 can serve a better function in structurally reinforcing the bottom plate 11, and to a certain extent, the first reinforcing member 131 can use less materials during design and manufacturing, thereby better meeting the lightweight requirements of the lower case body 10. By providing the second folded edge 1314, the first reinforcing member 131 and the second reinforcing member 132 can be provided with a good mating and overlapping surface when being connected and fixed, thereby ensuring more convenient and stable connection and fixation between the first reinforcing member 131 and the second reinforcing member 132.

In some examples of the present application, the first reinforcing member 131 and the second reinforcing member 132 may both be sheet metal members.

The first reinforcing member 131 and the second reinforcing member 132 may be formed by sheet metal stamping, hemming, bending, ironing, laser cutting, or the like using a metal plate material such as a steel plate or an aluminum alloy, to form structures such as the first plate part 1311, the second plate part 1312, the first folded edge 1313, and the second folded edge 1314 on the first reinforcing member 131.

In the embodiments, the first reinforcing member 131 and the second reinforcing member 132 are both configured as sheet metal members, and the first reinforcing member 131 and the second reinforcing member 132 are convenient to form, easy to process, and have low manufacturing costs. The first reinforcing member 131 and the second reinforcing member 132 after processing and forming are lightweight and have high structural strength, thereby serving a good function in structurally reinforcing the bottom plate 11, meeting the lightweight requirements of the lower case body 10, and effectively improving the gravimetric energy density of the battery pack 1000.

In an embodiment of the present application, as shown in FIG. 6, a second connecting nut 123 may be embedded at the position of the second connecting hole.

The second connecting nut 123 is embedded at the position of the second connecting hole, the second connecting nut 123 may be a rivet nut, and the second connecting nut 123 is fixed at the position of the second connecting hole in a penetrating manner by riveting. When the lower case body 10 is assembled and fixed to the upper case body 20, the fastener extends from the outer side of the upper case body 20 into the second connecting hole to be screwed into the second connecting nut 123 in a fitting manner, thereby tightening and fixing the upper case body 20 and the first side plate 12 in the circumferential direction of the first side plate 12. Optionally, the second connecting nut 123 may also be a common hex nut, and the second connecting nut 123 may be fixed at the position of the second connecting hole by welding.

In the embodiments, the second connecting nut 123 is embedded at the position of the second connecting hole, such that when the lower case body 10 is assembled and fixed to the upper case body 20, the fastener may extend from the outer side into the second connecting hole and be screwed into the second connecting nut 123 in a fitting manner to tighten the lower case body 10 and the upper case body 20, thereby ensuring more convenient and easier connection and fixation between the lower case body 10 and the upper case body 20.

In some embodiments of the present application, as shown in FIG. 5, the case 100 may further include a heat exchange member 14. The heat exchange member 14 is fixed on the bottom plate 11 and located on the upper side of the bottom plate.

Specifically, the heat exchange member 14 includes flat tubes and manifolds. A plurality of flat tubes are provided, and the plurality of flat tubes extend in the first direction and are spaced apart in the second direction. Two manifolds are provided and arranged at two ends of the flat tubes in the first direction, respectively, and the two ends of the plurality of flat tubes are connected to the two manifolds, respectively.

In the embodiments, the heat exchange member 14 is fixed on the bottom plate 11, and the heat exchange member 14 can serve a good function in dissipating heat from the battery cells in the battery pack 1000. By fixing the heat exchange member to the bottom plate, the heat exchange member 14 can be fixed on the bottom plate 11 conveniently and stably, and the heat exchange member 14 can be mounted and arranged in the case 100 conveniently and easily.

A case 100 according to embodiments of a second aspect of the present application is described below with reference to FIGs. 2 to 6.

As shown in FIGs. 2 to 6, the case 100 according to the embodiments of the present application includes the lower case body 10 and the upper case body 20 according to the embodiments of the first aspect of the present application. The upper case body 20 includes a top plate 21 and second side plates 22. Two second side plates 22 are provided, the two second side plates 22 are respectively connected to two ends of the top plate 21 in a first direction and extending downward, and the top plate 21 and the two second side plates 22 are fitted together to form the upper case body 20 with openings at two ends in the first direction. A lower end of the second side plate 22 is connected to a first connecting part, and two first side plates 12 cover openings on two sides of the upper case body 20 in the first direction, respectively.

The two second side plates 22 of the upper case body 20 are fitted together with the two first side plates 12 of the lower case body 10 to define in an enclosing manner a circumferential direction of a bottom plate 11. The first side plate 12, the second side plate 22, and the bottom plate 11 form a main body structure of the case 100, and are fitted together with the top plate 21 to form an accommodating cavity of the case 100. When the lower case body 10 is assembled to the upper case body 20, the openings on the two sides of the upper case body 20 are connected and fixed to the first side plates 12 via fasteners, respectively, and lower ends of the two second side plates 22 are connected and fixed to first connecting edges 112 of the bottom plate 11 via fasteners, respectively. The top plate 21 and the second side plate 22 may be processed and manufactured in an integrally forming manner, and the upper case body 20 may be made of plastic, aluminum alloy, steel, stainless steel, or the like during processing and manufacturing. Optionally, the upper case body 20 is a plastic member.

According to the case 100 in the embodiments of the present application, by providing the lower case body 10 according to the embodiments of the first aspect described above, the lower case body 10 is provided with two first side plates 12, a lower end of the first side plate 12 is connected to an end of the bottom plate 11 in the first direction by full welding, and the two side edges of the bottom plate 11 in a second direction form a first connecting part fixed to the upper case body 20, such that the lower case body 10 can be processed and formed easily, and the production and manufacturing of the lower case body is more flexible and convenient, and the production cost is low.

In some embodiments of the present application, as shown in FIG. 2, the case 100 may further include a sealing member 30. The sealing member 30 includes first sealing parts and second sealing parts. Two first sealing parts are provided and located at two ends of the second sealing parts in the first direction, respectively, and the first sealing part extends in the second direction. Two second sealing parts are provided, the two second sealing parts extend in the first direction and are spaced apart in the second direction, two ends of one of the second sealing parts in the first direction are connected to one end of each of the two first sealing parts in the second direction, respectively, and two ends of the other one of the two second sealing parts in the first direction are connected to the other end of each of the two first sealing parts in the second direction, respectively, such that the first sealing part is connected to the two ends of the second sealing part in the second direction and forms an annular shape with the second sealing part, the first sealing part is disposed between the upper case body 20 and the first connecting edges 112, and the second sealing part is disposed between the upper case body 20 and the second connecting edges 122.

The sealing member 30 may be a sealant or a sealing gasket, the first sealing part may be disposed on a side of the first connecting hole in the upper-lower direction, or the first sealing part may cover the vertical surface of the first connecting edge 112, and the second sealing part may be disposed on a side of the second connecting hole in the first direction, or the second sealing part may cover the surface of the second connecting edge 122. Optionally, the sealing member 30 is a sealing gasket.

In the embodiments, the sealing member 30 is disposed at the connection position between the upper case body 20 and the lower case body 10, thereby serving a good function in sealing the case 100. As a result, the accommodating cavity formed by the lower case body 10 and the upper case body 20 fitted together is reliably sealed, and then various components such as battery cells in the case 100 can operate in a good environment, thereby ensuring more stable operation of the battery pack 1000.

A battery pack 1000 according to embodiments of a third aspect of the present application is described below with reference to FIGs. 2 to 6.

As shown in FIGs. 2 to 6, the battery pack 1000 according to the embodiments of the present application includes the case 100 according to the embodiments of the second aspect of the present application.

Other configurations and operations of the case 100 according to the embodiments of the present application are known to those of ordinary skill in the art and will not be described in detail herein.

According to the battery pack 1000 in the embodiments of the present application, the battery pack 1000 is provided with the case 100 according to the embodiments of the second aspect described above, the case 100 is provided with two first side plates 12, a lower end of the first side plate 12 is connected to an end of a bottom plate 11 in a first direction by full welding, and two side edges of the bottom plate 11 in a second direction form a first connecting part fixed to an upper case body 20, such that a lower case body 10 can be processed and formed easily, and the production and manufacturing of the lower case body is more flexible and convenient, and the production cost is low.

An electric device 10000 according to embodiments of a fourth aspect of the present application is described below with reference to FIGs. 1 to 6.

As shown in FIGs. 1 to 6, the electric device 10000 according to the embodiments of the present application includes the battery pack 1000 according to the embodiments of the third aspect of the present application.

Other configurations and operations of the electric device 10000 according to the embodiments of the present application are known to those of ordinary skill in the art and will not be described in detail herein.

According to the electric device 10000 in the embodiments of the present application, by providing the battery pack 1000 according to the embodiments of the third aspect described above, the battery pack 1000 is provided with two first side plates 12, a lower end of the first side plate 12 is connected to an end of a bottom plate 11 in a first direction by full welding, and the two side edges of the bottom plate 11 in a second direction form a first connecting part fixed to an upper case body 20, such that a lower case body 10 can be processed and formed easily, and the production and manufacturing of the lower case body is more flexible and convenient, and the production cost is low.

An electric device 10000 according to a specific embodiment of the present application is described below with reference to FIGs. 1 to 6.

As shown in FIGs. 1 to 6, the electric device 10000 is a vehicle, and the vehicle includes a battery pack 1000, a controller 2000, and a motor 3000. The controller 2000 is electrically connected to the motor 3000 and the battery pack 1000, and the battery pack 1000 is electrically connected to the motor 3000.

The battery pack 1000 includes a case 100. The case 100 is provided with a lower case body 10, an upper case body 20, and a sealing member 30. The lower case body 10 includes two first side plates 12, a bottom plate 11, and a reinforcing structure 13. The bottom plate 11 extends in the first direction, the two first side plates 12 are vertically disposed and arranged at two ends of the bottom plate 11 in a first direction, respectively, support plate parts 111 are formed at the two ends of the bottom plate 11, a connecting flange 121 extending toward the bottom plate 11 in the first direction is formed at a lower end of the first side plate 12, and the connecting flange 121 overlaps the support plate part 111 and is connected to the support plate part 111 by full welding in the second direction. A first connecting edge 112 is formed on two sides of the bottom plate 11 in the second direction, the first connecting edge 112 extends upward in a vertical direction, a first connecting hole is formed on the first connecting edge 112, the first connecting hole is provided with a first connecting nut 113, and the first connecting nut 113 is a rivet nut. The water-cooling structure 14 is fixed on the bottom plate 11.

The reinforcing structure 13 includes first reinforcing members 131 and second reinforcing members 132. The first reinforcing member 131 extends in the first direction and is connected to the first connecting edge 112 by welding, and the first reinforcing member 131 is provided with a clearance hole 101 fitted together with the rivet nut. Five second reinforcing members 132 are provided. The second reinforcing member 132 extends in the second direction, and two ends of the second reinforcing member are fixed to the first connecting edges 112 by welding, respectively. The reinforcing structure 13 is fixed to the bottom plate 11 by welding.

A second connecting edge 122 extending toward the bottom plate 11 in the first direction is formed on a circumferential direction of the first side plate 12, the second connecting edge 122 is provided with a second connecting hole, the second connecting hole is provided with a second connecting nut 123, and the second connecting nut 123 is a rivet nut.

The upper case body 20 includes a top plate 21 and two second side plates 22. The top plate 21 extends in the first direction, and two sides of the top plate 21 in the second direction extend downward to form the second side plates 22. The sealing member 30 is a seal ring and is disposed between the upper case body 20 and the first connecting edges 112 and the second connecting edges 122. The water-cooling structure 14 is disposed on the bottom plate 11.

When the lower case body 10 is processed and manufactured, the reinforcing structure 13, the bottom plate 11, and the first side plates 12 are processed and formed separately and then assembled, the reinforcing structure 13 is welded to the lower side of the bottom plate 11, and the first side plates 12 are welded to the two ends of the bottom plate 11 in the first direction, respectively, so as to complete the production and manufacturing of the lower case body 10. In this way, the processing and formation of the lower case body 10 is simple and easy, the production and manufacturing of the lower case body 10 is more flexible and convenient, and the production cost is saved.

When the case 100 is assembled, the water-cooling structure 14 is arranged on the bottom plate 11, and the seal ring is arranged on the first connecting edges 112 and the second connecting edges 122. The upper case body 20 is fitted together with the first connecting edges 112 and the second connecting edges 122 of the lower case body 10 to clamp the seal ring to form a good seal, and the upper case body 20 and the lower case body 10 are connected to the rivet nut in a threaded manner via a bolt passing through the first connecting hole and the second connecting hole, thereby connecting and fastening the upper case body 20 and the lower case body 10.

In the embodiments, the lower case body 10 is provided with the two first side plates 12, the lower end of the first side plate 12 is connected to an end of the bottom plate 11 in the first direction by full welding, and the two side edges of the bottom plate 11 in the second direction form a first connecting part fixed to the upper case body 20, such that the lower case body 10 can be processed and formed easily, and the production and manufacturing of the lower case body is more flexible and convenient, and the production cost is low.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A lower case body for a battery pack, wherein the lower case body comprises:
a bottom plate (11), the bottom plate (11) extending in a first direction in a horizontal plane, two side edges of the bottom plate (11) in a second direction in the horizontal plane being provided with first connecting parts, the first connecting parts being configured to be connected to an upper case body (20) of the battery pack, and the first direction intersecting the second direction; and
first side plates (12), two first side plates (12) being provided and arranged at two ends of the bottom plate (11) in the first direction, respectively, the first side plates (12) being vertically disposed, and a lower end of the first side plate (12) being connected to the bottom plate (11) by full welding.

2. The lower case body according to claim 1, wherein a connecting flange (121) extending toward the bottom plate (11) in the first direction is formed at the lower end of the first side plate (12), and the connecting flange (121) overlaps the bottom plate (11) and is connected to the bottom plate by welding.

3. The lower case body according to claim 2, wherein the two ends of the bottom plate (11) in the first direction are provided with support plate parts (111), and the connecting flange (121) is supported on an upper side surface of the support plate part (111) and connected to the support plate part (111).

4. The lower case body according to any one of claims 1 to 3, wherein at least one of the bottom plate (11) and the first side plate (12) is provided with a positioning structure, the positioning structure is configured to position the first side plate (12) on the bottom plate (11), and the positioning structure is formed as a positioning hole, a positioning post, and/or a positioning surface.

5. The lower case body according to any one of claims 1 to 4, wherein first connecting edges (112) extending in a vertical direction are formed on the two side edges of the bottom plate (11) in the second direction, the first connecting part is formed on the first connecting edge (112), the first connecting part is formed as a first connecting hole and penetrates through the first connecting edge (112) in the second direction, a plurality of first connecting holes are provided, the plurality of first connecting holes are spaced apart in the first direction, and the first connecting edge (112) is provided in the first connecting hole in a penetrating manner via a fastener to be connected to the upper case body (20).

6. The lower case body according to claim 5, wherein a first connecting nut (113) is embedded at a position of the first connecting hole.

7. The lower case body according to any one of claims 5 and 6, wherein the first connecting edges (112) are formed by bending the two side edges of the bottom plate (11) in the second direction upward.

8. The lower case body according to any one of claims 1 to 7, wherein the lower case body further comprises a reinforcing structure (13), and the reinforcing structure (13) is connected to the bottom plate (11) and arranged on a lower side of the bottom plate (11).

9. The lower case body according to claim 8, wherein the reinforcing structure (13) is connected to the bottom plate (11) by welding.

10. The lower case body according to any one of claims 8 and 9, wherein the reinforcing structure (13) is of a frame structure and comprises:
first reinforcing members (131), two first reinforcing members (131) being provided, and the two first reinforcing members (131) extending in the first direction and being spaced apart in the second direction; and
second reinforcing members (132), the second reinforcing member (132) extending in the second direction, and two ends of the second reinforcing member being connected to the two first reinforcing members (131), respectively.

11. The lower case body according to claim 10, wherein a plurality of second reinforcing members (132) are provided, and the plurality of second reinforcing members (132) are spaced apart in the first direction.

12. The lower case body according to any one of claims 10 and 11, wherein the first reinforcing member (131) comprises a first plate part (1311) and a second plate part (1312), the first plate part (1311) is vertically disposed, the second plate part (1312) is connected to a lower end of the first plate part (1311) and extends toward the second reinforcing member (132) in the second direction to be connected to the second reinforcing member (132), and the bottom plate (11) is arranged between two first plate parts (1311) of the two first reinforcing members (131).

13. The lower case body according to claim 12, wherein an upwardly extending first folded edge (1313) is formed at an end, facing away from the first plate part (1311), of the second plate part (1312), and a groove is defined between the first folded edge (1313) and the first plate part (1311),
the first connecting edges (112) extending in the vertical direction are formed on the two side edges of the bottom plate (11) in the second direction, the first connecting edge (112) is arranged in the groove, and the first connecting part is formed on the first connecting edge (112).

14. The lower case body according to claim 13, wherein a plurality of clearance holes (101) penetrating through the first plate part (1311) in the second direction are formed on the first plate part (1311), the plurality of clearance holes (101) are in one-to-one correspondence with a plurality of first connecting parts, and the clearance holes (101) are aligned with the corresponding first connecting parts in the second direction, thereby allowing the first connecting parts to be exposed.

15. The lower case body according to any one of claims 13 and 14, wherein a second folded edge (1314) extending away from the first plate part (1311) in the second direction is formed at an upper end of the first folded edge (1313), and the second folded edge (1314) overlaps an upper side surface of the second reinforcing member (132).

16. The lower case body according to any one of claims 10 to 15, wherein the first reinforcing member (131) and the second reinforcing member (132) are both sheet metal members.

17. The lower case body according to any one of claims 1 to 16, wherein the connecting flange (121) extending toward the bottom plate (11) in the first direction is formed at the lower end of the first side plate (12), the connecting flange (121) is connected to the bottom plate (11) by welding,
a second connecting edge (122) extending in the first direction is formed on a peripheral edge of the first side plate (12), the second connecting edge (122) extends in a circumferential direction of the first side plate (12), and two ends of the second connecting edge are connected to two ends of the connecting flange (121) in the second direction, respectively,
a plurality of second connecting holes are formed on the second connecting edge (122), the plurality of second connecting holes are spaced apart in the circumferential direction of the first side plate (12), and the second connecting edge (122) is provided in the second connecting hole in a penetrating manner via a fastener to be connected to the upper case body (20)

18. The lower case body according to claim 17, wherein a second connecting nut (123) is embedded at a position of the second connecting hole.

19. A case, comprising:
the lower case body according to any one of claims 1 to 18; and
an upper case body (20), the upper case body (20) comprising a top plate (21) and second side plates (22), two second side plates (22) being provided, the two second side plates (22) being respectively connected to two ends of the top plate (21) in the first direction and extending downward, and the top plate (21) and the two second side plates (22) being fitted together to form the upper case body (20) with openings at two ends in the first direction,
wherein a lower end of the second side plate (22) is connected to the first connecting part, and the two first side plates (12) cover openings on two sides of the upper case body (20) in the first direction, respectively.

20. A battery pack, comprising the case according to claim 19.

21. An electric device, comprising the battery pack according to claim 20.
